# EUROPÄISCHE PATENTSCHRIFT

(11) **EP 0 275 127 B1**
(45) Veröffentlichungstag und Bekanntmachung des Hinweises auf die Patenterteilung: **29.12.1993**
(21) Anmeldenummer: 88200003.7
(22) Anmeldetag: 06.01.1988
(51) Int. Cl.: A21B 3/04

(54) **Kondensoreinrichtung für in einem Backofen entstehende Wrasen**
Condenser for the vapours in an oven
Condensateur pour les buées d'un four

(30) Priorität: 10.01.1987 DE 3700567
(43) Veröffentlichungstag der Anmeldung: 20.07.1988
(73) Patentinhaber: Bauknecht Hausgeräte GmbH, D-70565 Stuttgart (DE); WHIRLPOOL EUROPE B.V., 5507 SK Veldhoven (NL)
(72) Erfinder: Braun, Walter, Dipl.-Ing. (FH), D-7060 Schorndorf (DE); Ehmann, Reiner, D-7056 Weinstadt (DE); Mendler, Alfred, Dipl.-Ing. (FH), D-7000 Stuttgart 80 (DE)
(74) Vertreter: Melio, Jan Dirk

(56) Entgegenhaltungen:
- DE-A- 3 338 094
- GB-A- 237 665
- US-A- 3 327 610
- US-A- 3 792 698

## Beschreibung

Die Erfindung bezieht sich auf eine Kondensoreinrichtung fuer in einer Backmuffel eines Backofens entstehende Wrasen mit einem Kondensor und einem entnehmbaren Kondensatsammelbehaelter.

Ein derartiger Kondensoreinrichtung ist bekannt aus EP-A-0095797. In dieser bekannten Vorrichtung werden beim Kochen beispielsweise in Brat- oder Fritiergefaessen entstehende Gemische aus Wasserdampf und anderen fluechtigen Stoffen mit einem, ein Latentwaermespeichermittel enthaltenden Kondensor kondensiert. Die mitgefuehrten Geruchsstoffe werden dabei im Kondensat aufgefangen, so dass eine Geruchsbelaestigung verhindert ist. Das die Geruchsstoffe enthaltende, unangenehm riechende Kondensat wird in dem Kondensatsammelbehaelter gesammelt und kann anschliessend in einen Ausguss geschuettet werden. Um die Geschmacksbildung waehrend des Kochens zu beeinflussen, kann das anfallende Kondenswasser auch ganz oder teilweise zu der Kochstelle zurueckgefuert werden. Der Austritt von mit Geruchsstoffen vermischtem Dampf ins Freie ist dabei ebenfalls vermieden.
Bei laengerem Gebrauch der Kondensatoreinrichtung koennen sich an dem Kondensor Fettstoffe und Geruchsstoffe niederschlagen, die dessen Wirksamkeit zum Beispiel durch Bildung einer, die Wirksamkeit des Waermeaustausches herabsetzenden sowie die Stroemungsverhaeltnisse unguenstig beeinflussenden Schicht mindern. Desgleichen koennen sich derart absetzende Geruchs- oder Fettstoffe, die auch chemischen Umwandlungsprozessen unterliegen, zu einer Geruchsbelaestigung, insbesondere waehrend der Entnahme des Kondensatsammelbehaelters, fuehren.

Bei einem Bach- und Bratofen mit einer Wrasenabfuehrungseinrichtung (DE-OS 3 338 094) strömt der Wrasen über einen Abluftschacht aus der Backofenmuffel. Infolge der mit zunehmender Länge des Abluftschachtes sich abkühlenden Wrasen kommt es an dessen Wandungen durch Kondensation der Wrasen zur Bildung von Kondenswasser, das, um ein Rücktropfen in das Innere der Backofenmuffel zu verhindern, in einer Kondenswassersammeleinrichtung aufgefangen wird. Da eine Entleerung der Kondenswassersammeleinrichtung nicht vorgesehen ist, können sich dort absetzende Fette und Verschmutzungen infolge der enthaltenen Geruchsstoffe zu einer Geruchsbelästigung führen.

Es ist weiter bekannt (DE-OS 3 001 747), in einem Garraum entstehende Wrasen mittels Wassereinsprühdüsen in einem Abluftrohr zu kondensieren. Das anfallende Kondensat wird zusammen mit dem eingesprühten Wasser über eine Ablaufleitung abgeführt. In dem Kondensat enthaltene Geruchsstoffe können somit wirksam entfernt werden, doch setzt dies den Anschluß der bekannten Einrichtung an eine Wasserzulauf- sowie eine Ablaufleitung voraus.

Es ist ferner bekannt (DE-OS 2 946 745, US-PS 2 862 095), in Haushaltsbacköfen entstehende Abgase mit katalytischen Zellen zu behandeln, um sie betreffend eine Geruchsbildung unschädlich zu machen. Derartige Verfahren setzen einen großen gerätetechnischen Aufwand voraus und führen während ihres Einsatzes zu einem großen Energieverbrauch.

Es ist auch bekannt (DE-OS 2 807 690), in Kochherden entstehende Wrasen durch ein beheizbares Drahtgitter hindurchzuführen, um durch eine Nachverbrennung der Wrasen in ihnen befindliche Rauchschwaden und Fettdämpfe zu vernichten, sodaß eine Geruchsbelästigung in der Küche verhindert ist. Bei dieser Vorgehensweise fällt neben einem hohen gerätetechnischen Aufwand ein zusätzlicher Energieverbrauch waehrend des Betriebs an.

Ebenso ist es bekannt (US-PS 3 160 153), in der Umluft von Haushaltsoefen vorhandene Fettanteile ueber Filter zu entfernen. Daneben, da nicht saemtliche Geruchsstoffe ueber Filter entfernbar sind, fuehrt diese Vorgehensweise dazu, dass die Filter haeufig ersetzt oder gereinigt werden muessen, damit ihre Wirksamkeit nicht herabgesetzt wird.

Weiterhin ist aus der US-A-3 792 698 ein Druck-Kochgeraet bekannt, mit eine Einrichtung zur Daempfung des aus dem Geraet entweichenden Dampfes. Diese Einrichtung umfasst dabei ein Daempfergehaeuse das loesbar an das Kochgeraet eingeklinkt werden kann. Im Daempfergehaeuse ausgefaelltes Kondensat kann durch Abnahme des gesammmten Dampfergehaeuses entleert werden. Bei dieser bekannten Vorrichtung dient der Daempfer in erster Linie zum Laermschutz und gesonderte Bauteile koennen dieser Vorrichtung zur Reinigung nicht entnommen werden.

Der Erfindung liegt die Aufgabe zugrunde, eine Kondensoreinrichtung der genannten Art so auszubilden, dass in den Wrasen enthaltene Fette und Geruchsstoffe einfach und wirksam daran gehindert werden, dass sie sich als Fettfilm in der Umgebung niederschlagen und zu einer Geruchsbelaestigung fuehren.

Diese Aufgabe ist bei einer gattungsgemaessen Kondensoreinrichtung dadurch geloest,
- dass der Kondensor und der Kondensatsammelbehaelter als gesonderte Bauteile entnehmbar in einem mit einer verschliessbaren Entnahmeoeoffnung versehenen Gehaeuse angeordnet sind und
- dass das Gehaeuse innerhalb des Backofengehaeuses an einer Wand befestigt und ueber einen Abluftkanal dicht mit der Backmuffel verbunden ist.

Dadurch, dass Kondensor und Kondensatsammelbehaelter entnehmbar angeordnet sind, koennen sowohl in dem Kondensat enthaltene als auch an dem Kondensatsammelbehaelter oder dem Kondensor abgelagerte Geruchsstoffe einfach und wirksam entfernt werden. Die Geruchsstoffe koennen somit weder durch einen direkten Transport mit der Abluft ins Freie zu einer unmittelbaren Geruchsbelaestigung fuehren, noch koennen in der Kondensoreinrichtung gesammelte oder abgesetze Geruchsstoffe mittelbar zu einer Geruchsbelaestigung fuehren. Dadurch, dass Kondensor und Kondensatsammelbehaelter in einem, mit einer verschliessbaren Entnahmeoeffnung versehenen Kondensorgehaeuse angeordnet sind, sind sie zur Reinigung bzw. Entleerung einfach entnehmbar und im Anschluss daran wieder einsetzbar. Die Reinigung des Kondensors und des Kondensatsammelbehälters kann dabei in einer Geschirrspülmaschine durchgeführt werden. Über die verschließbare Entnahmeöffnung wird während des Einsatzes der Kondensoreinrichtung ein Austritt von im Wasserdampf enthaltenen Fett- und Geruchsstoffen verhindert.

Bei einer bevorzugten Ausführungsform ist das Gehäuse fest mit einem Backofengehäuse und über einen Abluftkanal dicht mit einer Backmuffel verbunden. Es ergibt sich damit ein einfacher und wirksamer Aufbau der Kondensoreinrichtung.

Bei einer weiteren bevorzugten Ausführungsform ist die Entnahmeöffnung durch eine Blende über eine Riegelverbindung dicht verschließbar. Während durch die Riegelverbindung das Kondensorgehäuse sicher verschließbar ist, sind nach Abnahme der Blende Kondensor und Kondensatsammelbehälter zum Reinigen bzw. Entleeren einfach entnehmbar.

Es hat sich dabei als vorteilhaft herausgestellt, daß die Riegelverbindung über einen, mit der Blende drehbar verbundenen, in der Entriegelstellung über eine Druckfeder ausrückbaren Drehgriff betätigbar ist. Die Handhabung der Riegelverbindung zum Einsetzen bzw. Entnehmen der Blende ist dadurch besonders einfach.

Um eine wirksame Kondensation zu erzielen kann in dem Kondensor eine Flüssigkeit als Kühlmedium eingesetzt sein. In einfachster Weise ist dabei Wasser verwendbar, das vor dem Betrieb des Backofens in den entnehmbaren Kondensor gefüllt wird. Bei kurz aufeinanderfolgenden Backvorgängen kann die Wirksamkeit der Kondensoreinrichtung durch einen Austausch des Wassers nach jedem Backvorgang gesteigert werden.

Es kann dabei auch von Vorteil sein, daß der Kondensor zum Zu- bzw. Abfluß der Flüssigkeit mit einer Zulauf-bzw. Abflußleitung verbindbar ist. Dadurch ist beispielsweise Wasser dem Kondensor kontinuierlich während eines Backvorganges oder in Intervallen zwischen aufeinanderfolgenden Backvorgängen zuführbar. Die Wirksamkeit der Kondensoreinrichtung ist damit weiter erhöhbar und es entfällt die Notwendigkeit, das in dem Kondensor enthaltene Wasser manuell auszutauschen.

Bei einer weiteren bevorzugten Ausführungsform ist der Kondensor durch einen Luftstrom durchströmbar. Die Kühlung des Kondensors bzw. der Wärmeaustausch setzt dabei lediglich den Einsatz eines Ventilators zur Erzeugung einer Luftströmung voraus; ein besonderes Kühlmedium ist nicht erforderlich.

Bei einer weiter bevorzugten Ausführungsform enthält der Kondensor Latentwärmespeicherelemente. Diese werden während eines Backvorganges dabei zunächst durch die heißen Wrasen auf ein höheres Temperaturniveau gebracht, von wo aus sie durch weitere Wärmezufuhr in die flüssige Phase übergeführt und gegebenenfalls anschließend weiter im Temperaturniveau erhöht werden. Es hat sich dabei als vorteilhaft herausgestellt, daß die Latentwärmespeicherelemente einzeln entnehmbar sind. Sie können dadurch besonders einfach gereinigt und im Bedarfsfalle regeneriert werden.

Ein Ausführungsbeispiel einer erfindungsgemäßen Kondensoreinrichtung für in einem Backofen entstehende Wrasen ist nachfolgend anhand der Zeichnung beschrieben.

Es zeigen:
Fig. 1 einen Längsschnitt durch eine schematisch dargestellte Kondensoreinrichtung,
Fig. 2 den Schnitt I-I nach Fig. 1 und
Fig. 3 eine teilweise geschnittene Draufsicht der Kondensoreinrichtung nach Fig. 1 und Fig. 2.

Bei einer im Ganzen mit 1 bezeichneten Kondensoreinrichtung sind in einem Gehäuse 2 ein Kondensor 3 und darunterliegend ein Kondensatsammelbehälter 4 entnehmbar angeordnet. Der Kondensor 3 besteht gemäß dem Ausführungsbeispiel aus vier im wesentlichen rechteckförmigen, abgeschlossenen Behältern 5, die im Abstand voneinander angeordnet sind und über ein Rohr 6 miteinander verbunden sind. Das Rohr 6 hat eine verschließbare Einfüllöffnung 7 und mündet mit dem gegenüberliegenden Ende in den von der Eintrittsöffnung am weitesten entfernten Behälter 5. Die übrigen Behälter 5 sind durch, in dem Rohr vorhandene, zur Vereinfachung der Zeichnung nicht dargestellte Durchgangsöffnungen in dem Rohr 6 mit einer Kühlflüssigkeit wie beispielsweise Wasser füllbar.

Die oberen und die unteren Endflächen der Behälter 5 sind durch, jeweils im Abstand voneinander angeordnete, Haltelaschen 8, 9 miteinander verbunden. Durch Auflage der unteren Haltelaschen 9 an mit dem Gehäuse 2 verbundenen, im Querschnitt winkelförmigen Auflagern 10, 10ʹ ist der Kondensor 3 in dem Gehäuse 2 herausnehmbar gehaltert. Zur Erleichterung des Ein- und Ausschiebens des Kondensors 3 auf den Auflagern 10, 10ʹ sind zur Führung an den dem Auflager 10, 10ʹ gegenüberliegenden Endflächen der beiden seitlichen Behälter 5 in die Wand des Gehäuses 2 sickenförmige Ausformungen 11, 11ʹ eingeformt.

Das mit einer Wand 12 des Backofens durch Schrauben oder Niete verbundene Gehäuse 2 steht mit einer Backmuffel 13 über einem Abluftkanal 14 mit rechteckförmigem Querschnitt in Verbindung. Der Abluftkanal 14 ist dabei durch die Isolierung 15 der Backmuffel 13 geführt und sowohl gegenüber dem Gehäuse 2 als auch gegenüber dem Innenraum der Backmuffel 13 abgedichtet. Der Abluftkanal 14 verläuft unter einem Winkel α von etwa 15° zu einer horizontalen Fläche geneigt und mündet unterhalb der Auflager 10, 10ʹ und somit auch des Kondensors 3 in das Gehäuse 2.

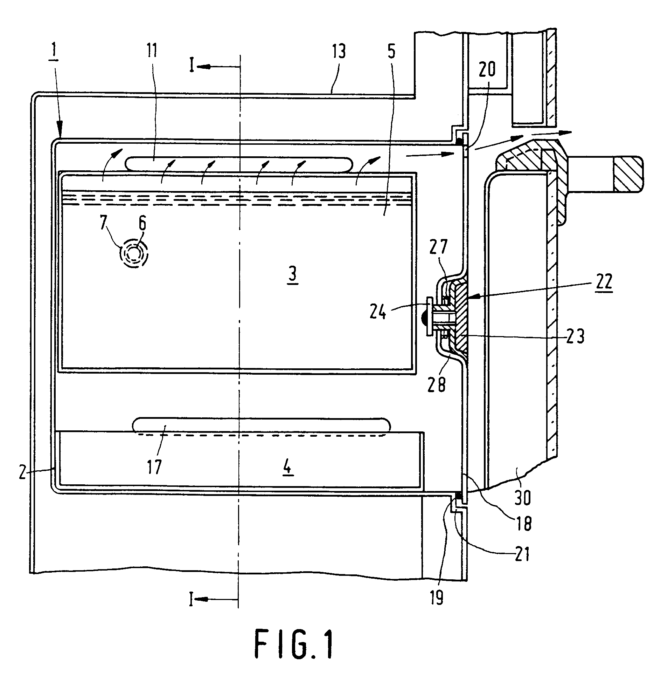

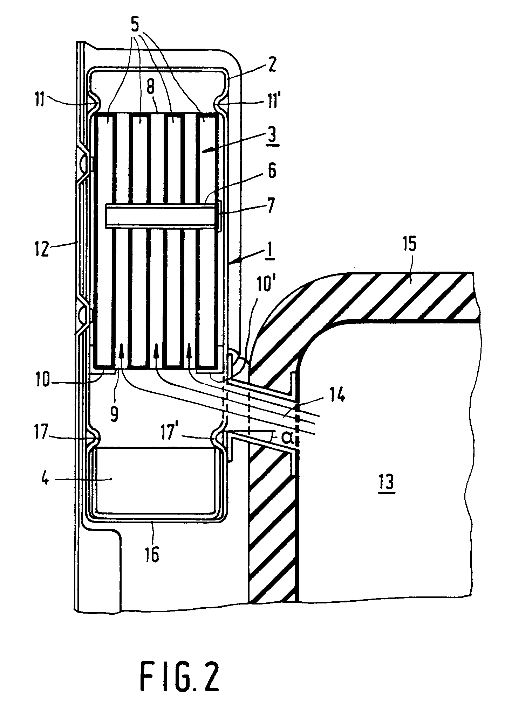

Aus der Backmuffel 13 über den Abluftkanal 14 austretende heiße Wrasen steigen in dem Gehäuse 2 durch die zwischen den Behältern 5 des Kondensors 3 gebildeten Zwischenräume nach oben. Durch Abkühlung der Wrasen an den Seitenflächen der mit einem Kühlmittel, wie beispielsweise Wasser, gefüllten Behälter 5 bildet sich Fett- und Geruchsstoffe enthaltendes Kondensat, das entgegen der in Fig. 1 und 2 durch Pfeile dargestellten Strömungsrichtung der Wrasen in dem Gehäuse 2 nach unten tropft und von dem unterhalb des Kondensors 3 angeordneten Kondensatsammelbehälter 4 aufgefangen wird. Der Kondensatsammelbehälter 4 hat im wesentlichen die gleiche Grundfläche wie der Kondensor 3 und das Gehäuse 2 und liegt an der unteren Wand 16 des Gehäuses 2 herausnehmbar auf. Um die Führung des Kondensatsammelbehälters 4 während des Herausnehmens bzw. Einsetzens zu erleichtern, sind benachbart dem oberen Rand des nach oben offenen Kondensatsammelbehälters 4 in die Seitenwände des Gehäuses 2 sickenförmige Ausformungen 17, 17ʹ eingeformt.

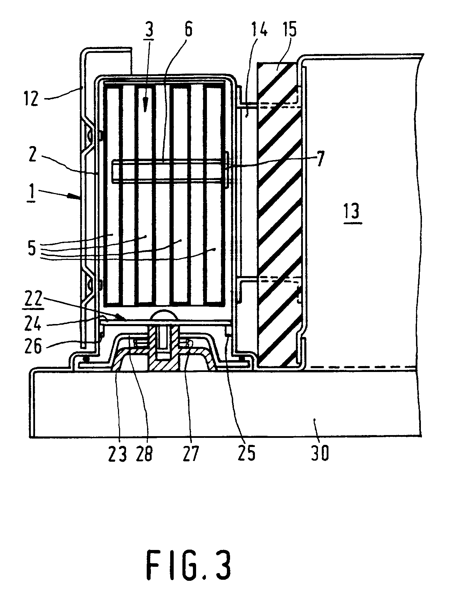

Die Entnahmeöffnung des Gehäuses 2 für das Herausnehmen und Einsetzen des Kondensors 3 und des Kondensatsammelbehälters 4 liegt, von außen verdeckt, hinter einer Tür 30 des Backofens und ist durch eine Blende 18 verschließbar. Nach dem Verschließen des Gehäuses 2 liegt die Blende 18 über eine Dichtung 19 an dem Gehäuse 2 an, so daß Luft aus dem Inneren des Gehäuses 2 nur über eine, im oberen Bereich der Blende 18 befindliche Austrittsöffnung 20 wie in Fig. 1 durch Pfeile gekennzeichnet, in einem Bereich oberhalb der Tür des Backofens 17 ins Freie treten kann. Nach Anlage der Blende 18 an der Dichtung 19 innerhalb eines für die Aufnahme der Blende 18 vorgesehenen, zurückgesetzten Bereichs 21 der Vorderseite des Gehäuses 2 ist die Blende 18 über eine Riegelverbindung 22 mit dem Gehäuse 2 verbindbar. Dazu wird ein mit einem Drehgriff 23 drehfest verbundener Riegel 24 in eine, in Fig. 1 und 3 dargestellte im wesentlichen horizontale Lage geschwenkt, in der er an den Seitenwänden des Gehäuses 2 einander gegenüberliegend angebrachte Ansätze 25, 26 hintergreift. Die Anlage des Riegels 24 an den Ansätzen 25, 26 erfolgt gegen den Druck einer Feder 27 zwischen dem Drehgriff 23 und einem Teil der Blende 18. Im verriegelten Zustand ist der Drehgriff 23 durch eine, in die Blende 18 eingeformte, im wesentlichen kegelstumpfförmige Aufnahme 28 aufgenommen. Nachdem der Riegel 24 aus seiner horizontalen Verriegelungsstellung in eine Entriegelungsstellung durch Drehen des Drehgriffes 23 verdreht worden ist, wird dieser durch die Feder 27 aus der Aufnahme 28 ausgerückt, so daß über den Drehgriff 23 als Handhabe die Blende 18 einfach von dem Gehäuse 2 abnehmbar ist.

Bei durch Abnahme der Blende 18 geöffnetem Gehäuse 2 sind Kondensor 3 und Kondensatsammelbehälter 4 in einfacher Weise aus dem Gehäuse 2 entnehmbar. Das in dem Kondensatsammelbehälter 4 angefallene, Fett- und Geruchsstoffe enthaltende, Kondensat ist somit, bspw. in einen Ausguß, einfach entleerbar und sowohl Kondensor 3 als auch Kondensatsammelbehälter 4 können gereinigt werden, so daß abgelagerte Fett- bzw. Geruchsstoffe einfach, z.B. in einer Geschirrspülmaschine, entfernbar sind. Es ist somit vermieden, daß während wie auch außerhalb des Betriebs des Backofens in den Wrasen enthaltene Fett- und Geruchsstoffe zu einer Geruchsbelästigung führen können.

Bei in kurzen Zeitabständen aufeinanderfolgenden Backvorgängen kann zur Erhöhung der Wirksamkeit des Kondensors 3 die in ihm enthaltene Kühlflüssigkeit ausgetauscht werden. Es kann aber auch der Kondensor 3 an einen Wasserzu-und Ablauf angeschlossen werden, so daß entsprechend den Bedürfnissen des Anwendungsfalls dem Kondensor 3 kontinuierlich oder in Zeitabständen Wasser zuführbar ist.

Die Erfindung ist nicht auf die Verwendung eines flüssigkeits- oder wassergekühlten Kondensors beschränkt. So sind auch durch einen mittels eines Ventilators erzeugten Frischluftstrom gekühlte Kondensoren sowie Latentwärmespeicherelemente enthaltende Kondensoren einsetzbar. Die Auswahl des geeignetsten Kondensors wird dabei mit beeinflußt von dem für den Backofen jeweils vorgesehenen Verwendungszweck und von an dem Aufstellungsort des Backofens vorhandenen Wasserzu- bzw. Abflußleitungen.

## Patentansprüche

1. Kondensoreinrichtung fuer in einer Bachmuffel (13) eines Backofens entstehende Wrasen mit einem Kondensor (3) und einem entnehmbaren Kondensatsammelbehaelter (4), dadurch gekennzeichnet,
- dass der Kondensor (3) und der Kondensatsammelbehaelter (4) als gesonderte Bauteile entnehmbar in einem mit einer verschliessbaren Entnahmeoeffnung versehenen Gehaeuse (2) angeordnet sind und
- dass das Gehaeuse (2) innerhalb des Backofengehaeuses an einer Wand (12) befestigt und ueber einen Abluftkanal (14) dicht mit der Backmuffel (13) verbunden ist.

2. Kondensoreinrichtung nach Anspruch 1,
dadurch gekennzeichnet,
dass die Entnahmeoeffung durch eine Blende (18) ueber eine Riegelverbindung (22) dicht verschliessbar ist.

3. Kondensoreinrichtung nach einem der Ansprueche 1 oder 2,
dadurch gekennzeichnet,
dass die Riegelverbindung (22) ueber einen, mit der Blende (18) drehbar verbundenen, in der Entriegelstellung ueber eine Druckfeder (27) ausrueckbaren Drehgriff (23) betaetigbar ist.

4. Kondensoreinrichtung nach einem der Ansprueche 1 bis 3,
dadurch gekennzeichnet,
dass in dem Kondensor (3) als Kuehlmedium eine Fluessigkeit eingesetzt ist.

5. Kondensoreinrichtung nach Anspruch 4,
dadurch gekennzeichnet,
dass die Fluessigkeit austauschbar ist.

6. Kondensoreinrichtung nach Anspruch 5,
dadurch gekennzeichnet,
dass der Kondensor zum Zu-bzw. Abfluss der Fluessigkeit mit einer Zulauf-bzw. Abflussleitung verbindbar ist.

7. Kondensoreinrichtung nach einem der Ansprueche 1 bis 3,
dadurch gekennzeichnet,
dass der Kondensor durch einen Luftstrom durchstroembar ist.

8. Kondensoreinrichtung nach einem der Ansprueche 1 bis 3,
dadurch gekennzeichnet,
dass der Kondensor einen Latentwaermespeicher enthaelt.

9. Kondensoreinrichtung nach Anspruch 8,
dadurch gekennzeichnet,
dass die Latentwaermespeicherelemente einzeln entnehmbar sind.

## Claims

1. A condenser device for vapours occurring in a baking muffle (13) of a baking oven, with a condenser (3) and with a removable condensate collection vessel (4), characterised in that
- the condenser (3) and the condensate collection vessel (4) are arranged, so as to be removable as separate components, in a housing (2) which is provided with a closable removal opening and
- the housing (2) is secured inside the baking oven housing on a wall (12) and is connected via an exhaust air canal (14) tightly with the baking muffle (13).

2. A condenser device according to Claim 1,
characterised in that
the removal opening is able to be closed tightly by a shutter (18) via a locking connection (22).

3. A condenser device according to one of Claims 1 or 2,
characterised in that
the locking connection (22) is able to be actuated by means of a rotary grip (23), rotatably connected with the shutter (18) and able to be disengaged in the unlocking position by means of a compression spring (27).

4. A condenser device according to one of Claims 1 to 3,
characterised in that
a liquid is used as cooling medium in the condenser (3).

5. A condenser device according to Claim 4,
characterised in that
the liquid is exchangeable.

6. A condenser device according to Claim 5,
characterised in that
the condenser is able to be connected with an inlet- or outlet line for the inflow or outflow of the liquid.

7. A condenser device according to one of Claims 1 to 3,
characterised in that
the condenser is able to have a stream of air flowing through it.

8. A condenser device according to one of Claims 1 to 3,
characterised in that
the condenser contains a latent heat reservoir.

9. A condenser device according to Claim 8,
characterised in that
the latent heat reservoir elements are able to be removed individually.

## Revendications

1. Système de condensation pour les buées qui se produisent dans un moufle (13) d'un four, comprenant un condenseur (3) et un réservoir extractible de collecte des condensats (4), caractérisé en ce que
- le condenseur (3) et le réservoir de collecte des condensats (4) sont agencés dans un boîtier (2) en tant que composants individuels extractibles, ledit boîtier étant pourvu d'une ouverture d'extraction obturable, et
- en ce que le boîtier (2) est fixé sur une paroi (12) à l'intérieur du boîtier du four et est raccordé de façon étanche avec le moufle 13 via un conduit d'évacuation d'air (14).

2. Système de condensation selon la revendication 1, caractérisé en ce que l'ouverture d'extraction peut être refermée de façon étanche par un opercule (13) au moyen d'une liaison à verrouillage (22).

3. Système de condensation selon l'une ou l'autre des revendications 1 et 2, caractérisé en ce que la liaison à verrouillage (22) peut être actionnée au moyen d'une poignée tournante (23), reliée en rotation avec l'opercule (13) et repoussée dans la position de déverrouillage au moyen d'un ressort de compression (27).

4. Système de condensation selon l'une quelconque des revendications 1 à 3, caractérisé en ce que l'on emploie un liquide en tant que média refroidissant dans le condenseur (3).

5. Système de condensation selon la revendication 4, caractérisé en ce que le liquide est échangeable.

6. Système de condensation selon la revendication 5, caractérisé en ce que le condenseur peut être relié avec une conduite d'alimentation ou d'évacuation pour l'alimentation ou l'évacuation du liquide.

7. Système de condensation selon quelconque des revendications 1 à 3, caractérisé en ce que le condenseur peut être traversé par un courant d'air.

8. Système de condensation selon quelconque des revendications 1 à 3, caractérisé en ce que le condenseur contient un accumulateur à chaleur latente.

9. Système de condensation selon la revendication 8, caractérisé en ce que les éléments accumulateurs à chaleur latente peuvent être enlevés individuellement.
